# EUROPÄISCHE PATENTANMELDUNG

(11) **EP 1 039 623 A2**
(43) Veröffentlichungstag der Anmeldung: **27.09.2000**
(21) Anmeldenummer: 00105300.8
(22) Anmeldetag: 14.03.2000
(51) Int. Cl.: H02P 1/24

(54) **Stell- und Hilfsantrieb in einem Kraftfahrzeug mit einem Gleichstrommotor mit Anlaufstrombegrenzung**

(30) Priorität: 26.03.1999 DE 19913956; 04.11.1999 DE 29919386 U
(71) Anmelder: SIEMENS AKTIENGESELLSCHAFT, 80333 München (DE)
(72) Erfinder: Reinhold, Andreas, Dipl.-Ing. (FH), 95173 Schönwald (DE); Steegmüller, Horst, Dipl.-Ing. (FH), 97076 Würzburg (DE)

(57) **Zusammenfassung**

Zur einfachen Begrenzung des Motorstroms (I_{M}) im Motoranlauf ist eine motoreigene jeweils bei externem Anschluß des Gleichstrommotors (M) an seine Speisespannung (U;GND) mitaktivierbare Regel- bzw. Steuervorrichtung vorgesehen, die zweckmäßigerweise entsprechend einem zeitlich ansteigenden Integrator-Steuersignal (S2) zunehmende Stromflusszeiten für den über Bürsten (B1;B2) eingespeisten Motorstrom (I_{M}) vorgibt und in den Gleichstrommotor (M) selbst oder in die Motorzuleitung (ML) oder in ein Relais (RE) zwischen der Speisespannungsquelle und dem Gleichstrommotor integriert ist.

## Beschreibung

Die Erfindung bezieht sich auf einen Stell- bzw. Hilfsantrieb in einem Kraftfahrzeug mit einem Gleichstrommotor mit Anlaufstrombegrenzung gemäß Patentanspruch 1 bzw. 2 bzw. 3 bzw. 4.

Die Standzeiten von über Bürsten gespeiste Gleichstrommotore sind insbesondere durch den Verschleiß der Bürsten bzw. des von diesen beschliffenen Kommutators bestimmt; maßgebliche Ursache für einen erhöhten Verschleiß sind hohe Stromdichten und dadurch bedingte hohe Temperaturbelastungen beim Motoranlauf nach einem Einschalten des Gleichstrommotors. Insbesondere elektrische Stell- bzw. Hilfsantriebe in Kraftfahrzeugen, wie z.B. für Fahrstabilitätsregelungen, Traktionskontrollen, elektrische Schalt- und Bremsgetriebe sowie elektrohydraulische Kupplungssysteme sind häufigen Einschaltungen mit entsprechend hohen Stromdichten unterworfen.

Durch die DE 197 25 029 A1 ist eine Vorrichtung zum Absaugen von Luft und darin enthaltenen Partikeln, wie Staub, Späne oder dergleichen, mit einem mittels einer Schalteranordnung an eine Wechselspannungsquelle anschließbaren Wechselstrom-Kommutatormotor bekannt, der die Luft durch einen Saugkanal absaugt. Eine Steuereinrichtung steigert beim Schließen der Schalteranordnung die Saugleistung des Saugmotors ausgehend von einer niedrigeren Einschaltsaugleistung bis zu einer höheren, gewünschten Betriebssaugleistung, so dass der zum Einschaltzeitpunkt durch den Saugmotor fließende Einschaltstrom kleiner ist als der sich ohne Einwirkung dieser Steuereinrichtung einstellen würdende Anlaufstrom. Hierdurch soll der Einschaltstrom bei einer höheren Betriebsleistung gering gehalten werden.

Gemäß Aufgabe vorliegender Erfindung soll bei einem über Bürsten gespeisten Stell- bzw. Hilfsantrieb in einem Kraftfahrzeug mit einem Gleichstrommotor eine Anlaufstrombegrenzung und damit eine wesentliche Verlängerung der Betriebsstandzeit mit geringem Steuer- bzw. Regelaufwand gewährleistet werden können.

Die Lösung der Erfindung gelingt durch einen Stell- bzw. Hilfsantrieb in einem Kraftfahrzeug mit einem Gleichstrommotor mit Anlaufstrombegrenzung gemäß Patentanspruch 1 bzw. 2 bzw. 3 bzw. 4; vorteilhafte Ausgestaltungen der Erfindung sind jeweils Gegenstand der Unteransprüche.

Die erfindungsgemäße motorzugeordnete Regel- bzw. Steuervorrichtung erlaubt einen anwenderseitigen Anschluß des Gleichstrommotors in bisher üblicher Weise an lediglich eine zweiphasige Speisespannung, wobei beim Anschalten des erfindungsgemäßen Gleichstrommotors selbsttätig ohne gesonderte anwenderseitige Regel- bzw. Steuersoftware eine im Sinne großer Betriebsstandzeiten vorteilhafte Anlaufstrombegrenzung aktiviert ist; die erfindungsgemäßen Anlaufstrombegrenzungen beeinflussen die Modifikation der elektrischen Schnittstelle zwischen dem Gleichstrommotor bzw. seiner Zuleitung oder Zuschaltung einerseits und dessen äußerer Spannungsversorgung andererseits, z.B. durch einen ansonsten notwendigen Steuerungspin einer gesonderten anwenderseitigen Regel- bzw. Steuersoftware für eine Sanftanlaufsteuerung, nicht, wobei mit dem Anlegen einer Speisespannung jeweils selbsttätig eine mit geringem Schaltungsaufwand steuer- bzw. regelbare motorseitig installierte Anlaufstrombegrenzung in Gang setzbar ist.

Im Rahmen besonders vorteilhafter Ausgestaltungen der Erfindung ist die Regel- bzw. Steuervorrichtung in den Gleichstrommotor selbst bzw. in seine Motorzuleitung bzw. in das Gehäuse eines Relais integriert, mit dem der Gleichstrommotor an die, in der Regel zweipolige, Speisespannung anschließbar ist.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in einem Blockschaltbild einen anwenderseitigen Anschluß eines Gleichstrommotors an seine Speisespannung;
- FIG 2: in einem Blockschaltbild eine erste motorinnere erfindungsgemäße Ausführung einer Regel- bzw. Steuervorrichtung zur Begrenzung des Motorstroms;
- FIG 3: eine aufgrund des Zusammenwirkens eines konstanten Oszillator-Taktsignals mit einem ansteigenden Integrator-Steuersignal sich ergebende pulsweitenmodulierte Steuerspannung zur Ansteuerung einer Versorgungseinheit des Gleichstrommotors;
- FIG 4-6: in jweils einem Blockschaltbild drei weitere, gegenüber FIG 2 vereinfachte, motorinnere Regel- bzw. Steuervorrichtungen zur Begrenzung des Motorstroms;
- FIG 7: anhand der Regel- bzw. Steuervorrichtung gemäß FIG 4 deren Integration in die Motorzuleitung;
- FIG 8: anhand der Regel- bzw. Steuervorrichtung gemäß FIG 4 deren Integration in das Relais-Gehäuse eines den Gleichstrommotor an seine Speisespannung angeschaltenen Relais;
- FIG 9: anhand der Regel- bzw. Steuervorrichtung gemäß FIG 4 deren gleichzeitige Ausbildung als Relais zur Anschaltung der Speisespannung an den Gleichstrommotor.

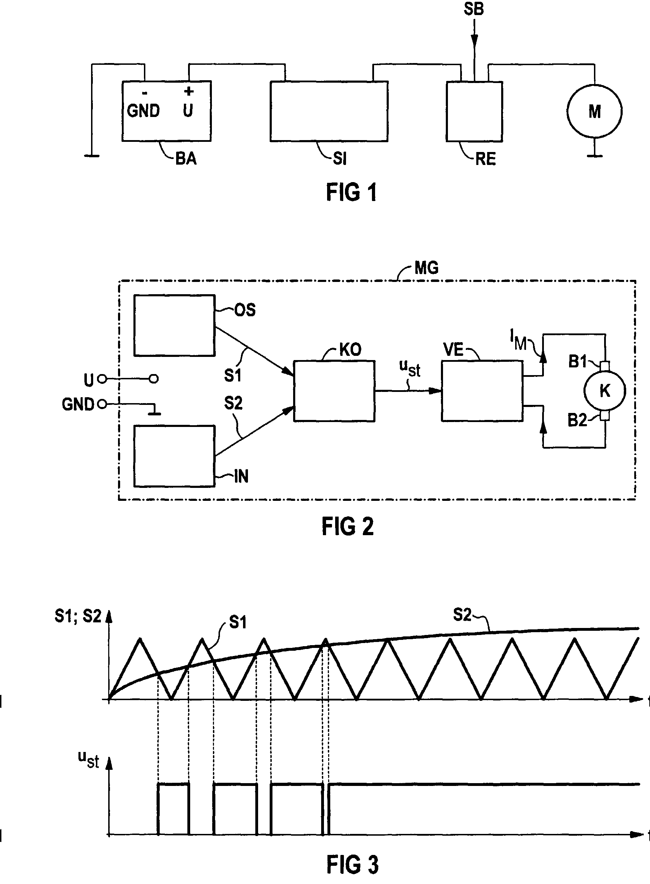

Gemäß FIG 1 ist motoraußenseitig zwischen einem Gleichstrommotor M als ein Stellmotor in einem Kraftfahrzeug, und dessen Gleich-Speisespannung U;GND in Form einer Batterie BA eine Sicherung SI und ein mit einem Schaltbefehl SB ein- bzw. ausschaltbares Relais RE vorgesehen.

Über das Relais RE wird die Speisespannung U;GND gemäß FIG 2 an eine in das Motorgehäuse MG des Gleichstrommotors M integrierte Regel- bzw. Steuervorrichtung OS;IN;KO;VE angelegt und ein Motorstrom I_{M} im Sinne eines Sanftanlaufs mit Anlaufstrombegrenzung über Bürsten B1;B2 an dessen Kommutator K weitergegeben, über den die Rotorwicklung des vorzugsweise statorseitig permanenterregten Gleichstrommotors M bestrombar ist.

Die Steuer- bzw. Regelvorrichtung gemäß FIG 2 enthält gemäß einer ersten Ausführung der Erfindung als wesentliche Bauteile einen ein konstantes Oszillator-Taktsignal S1 erzeugenden Oszillator OS, einen ein nach dem Anlegen der Speisespannung U;GND an den Gleichstrommotor M ansteigendes Integrator-Steuersignal S2 erzeugenden Integrator IN sowie einen beide Steuersignale vergleichenden Komparator KO, derart dass von diesem - wie aus FIG 3 ersichtlich - eine hinsichtlich ihrer Einschaltdauer zunehmende pulsweitenmodulierte Steuerspannung uₛₜ an eine Versorgungseinheit VE im Sinne eines ansteigenden Anlaufstromes IM abgegeben wird; am Ausgang des Komparators KO findet dabei jeweils ein Flankenwechsel (Low/High) der Steuerspannung uₛₜ statt, wenn Spannungsgleichheit vorliegt zwischen dem konstanten Oszillator-Taktsignal S1 und der zunächst von einem Anfangswert unterhalb des Maximalwertes des Oszillator-Taktsignals S1 beginnenden und nach dem Anlauf diesen Maximalwert übersteigenden Integrator-Steuersignal S2.

Sowohl der zeitliche Verlauf des Oszillator-Taktsignals S1 als auch der des Integrator-Steuersignals S2 können, z.B. in Anpassung an Motordaten bzw. an Anwenderdaten, einstellbar sein. Sämtliche Bausteine der Regel- bzw. Steuervorrichtung sind lediglich aus der Speisespannung U;GND versorgbar und benötigen keine gesonderten, nach außerhalb des Gleichstrommotors M verlaufenden Versorgungs- und/oder Regel- bzw. Steueranschlüsse.

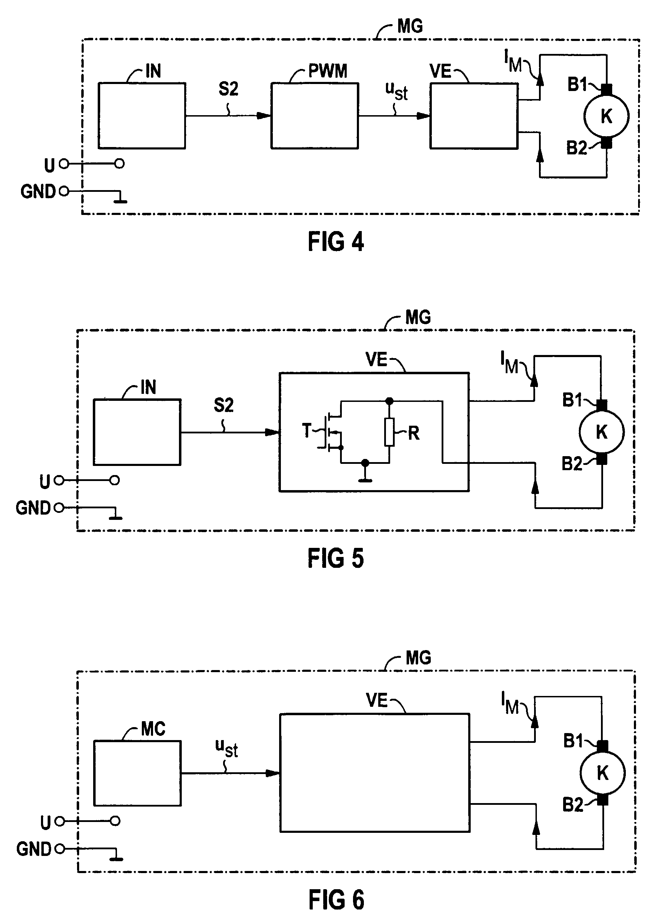

FIG 4 zeigt gemäß einer weiteren Ausführung der Erfindung eine erste Vereinfachung der motorinneren Regel- bzw. Steuervorrichtung mit einem integrierten PWM-Steller PWM, dessen ausgangsseitige Steuerspannung uₛₜ im Sinne einer Anlaufstrombegrenzung unmittelbar von dem Integrator-Steuersignal S2 eines - bereits aus der Ausführung gemäß FIG 2 bekannten - Integrators IN abgeleitet wird; mit steigendem Signalpegel des Integrator-Steuersignals S2 wächst die Einschaltpulsdauer des PWM-Stellers PWM für die Steuerspannung uₛₜ und damit die mittlere Stromstärke I_{M}.

FIG 5 zeigt eine weitere vereinfachte Ausführung der motorinneren Regel- bzw. Steuervorrichtung. Ein über die Bürsten B1;B2 und den Kommutator K mit der Rotorwicklung in Reihe liegender Vorwiderstand R ist über einen MOSFET T als Schalttransistor überbrückbar, dessen Widerstandswert in Abhängigkeit vom - wie gemäß FIG 2 bzw. FIG 4 ersichtlich - ansteigenden Integrator-Signalverlauf S2 steht.

FIG 6 zeigt eine Ausführung der Erfindung, bei dem eine im Sinne einer Anlaufstrombegrenzung variable Taktung der Steuerspannung uₛₜ für die Versorgungseinheit VE durch einen Microcontroller MC mit entsprechender abgespeicherter und bei Anlegen der Speisespannung U,GND aktivierter programmierter Kennlinie erfolgt.

Die erfindungsgemäße motoreigene Steuer- bzw. Regelvorrichtung muß nicht unbedingt innerhalb des Motorgehäuses des Gleichstrommotors, in diesem Fall vorzugsweise als integraler Bestandteil von dessen Bürstentragplatte, angeordnet sein, sondern kann bei Zuordnung zum jeweiligen Gleichstrommotor auch vorgesehen sein außerhalb dessen Motorgehäuses, vorzugsweise als integraler Bestandteil einer Motorzuleitung bzw. einer motorzugeordneten Einschalteinheit wie dem eingangs erwähnten, in FIG 1 dargestellten Relais RE; dabei kann die Regel- bzw. Steuervorrichtung von dem, z.B. am Motorgehäuse bzw. in dessen Motorzuleitung ML oder im Kraftfahrzeug selbst gehaltenen Relais RE, insbesondere innerhalb dessen Relaisgehäuse RE-G, aufgenommen werden und gegebenenfalls selbst die Ein-Ausschaltfunktion des Relais RE mitübernehmen.

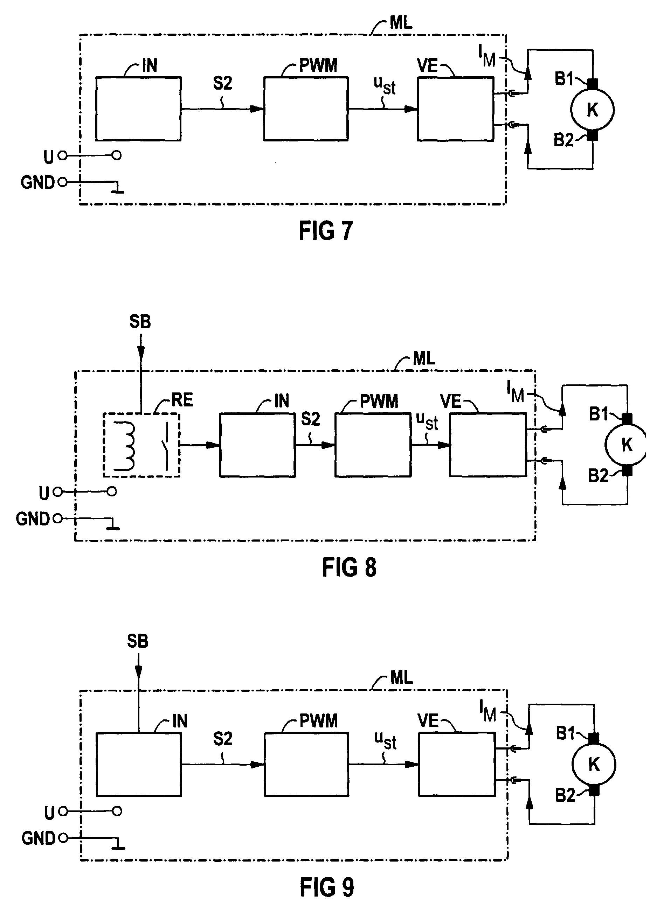

FIG 7 bis 9 zeigen im Sinne der letztgenannten Ausführungen - jeweils anhand des Schaltungsaufbaus für die Regel- bzw. Steuervorrichtung gemäß FIG 4 - die Integration der Regel-bzw. Steuervorrichtung in die Motorzuleitung ML des davon, z.B. über Steckkontakte S angeschlossenen Gleichstrommotors M (FIG 7) oder in das Relaisgehäuse RE-G des zum Anschluß der Speisespannung U;GND an den Gleichstrommotor M vorgesehenen Relais RE; in weiterer schaltungstechnischer Vereinfachung ist nach einer Ausgestaltung der Erfindung vorgesehen, auf ein gesondertes Relais zu verzichten und dessen Funktion in die Regel- bzw. Steuervorrichtung zu integrieren, die dann aufgrund des Schaltbefehls SB selbst die Speisespannung U;GND dem Gleichstrommotor 14 zuschaltet oder von diesem abschaltet.

## Patentansprüche

1. Stell- bzw. Hilfsantrieb in einem Kraftfahrzeug mit einem Gleichstrommotor mit Anlaufstrombegrenzung
- mit einer jeweils motorzugeordneten, lediglich durch externen Anschluss des Gleichstrommotors (M) an seine Speisespannung (U;GND) selbsttätig aktivierbaren Regel- bzw. Steuervorrichtung (OS;IN;KO;VE bzw. IN,PWM,VE bzw. IN,VE bzw. MC,VE) zur Begrenzung des Motorstroms (I_{M}) beim Motoranlauf;
- mit einer Bildung einer im Sinne einer Anlaufstrombegrenzung variablen Steuerspannung (uₛₜ) für die Versorgungseinheit (VE) durch Zusammenwirken eines Oszillators (OS) mit konstantem Oszillator-Taktsignal (S1) und einem Integrator (IN) mit dem im Sinne der Anlaufstrombegrenzung zwischen einem unteren Anfangswert und einem oberen Endwert ansteigenden Integrator-Steuersignal (S2).

2. Stell- bzw. Hilfsantrieb in einem Kraftfahrzeug mit einem Gleichstrommotor mit Anlaufstrombegrenzung
- mit einer jeweils motorzugeordneten, lediglich durch externen Anschluss des Gleichstrommotors (M) an seine Speisespannung (U;GND) selbsttätig aktivierbaren Regel- bzw. Steuervorrichtung (OS;IN;KO;VE bzw. IN,PWM,VE bzw. IN,VE bzw. MC,VE) zur Begrenzung des Motorstroms (I_{M}) beim Motoranlauf;
- mit einer Bildung einer im Sinne einer Anlaufstrombegrenzung variablen Steuerspannung (uₛₜ) für die Versorgungseinheit (VE) durch Zusammenwirken zwischen einem PWM-Steller (PWM) mit veränderbarem Tastverhältnis und einem Integrator (TN) mit einem zwischen einem unteren Anfangswert und einem oberen Endwert ansteigenden Integrator-Steuersignal (S2);

3. Stell- bzw. Hilfsantrieb in einem Kraftfahrzeug mit einem Gleichstrommotor mit Anlaufstrombegrenzung
- mit einer jeweils motorzugeordneten, lediglich durch externen Anschluss des Gleichstrommotors (M) an seine Speisespannung (U;GND) selbsttätig aktivierbaren Regel- bzw. Steuervorrichtung (OS;IN;KO;VE bzw. IN,PWM,VE bzw. IN,VE bzw. MC,VE) zur Begrenzung des Motorstroms (I_{M}) beim Motoranlauf;
- mit einer Bildung einer im Sinne einer Anlaufstrombegrenzung variablen Steuerspannung (uₛₜ) für die Versorgungseinheit (VE) mit einem durch einen Motor-Vorwiderstand (R1) überbrückbaren widerstandsveränderlichen Schalttransistor, insbesondere Mosfet (MF), durch Steuerabhängigkeit des Schalttransistors von dem Integrator-Steuersignal (S2).

4. Stell- bzw. Hilfsantrieb in einem Kraftfahrzeug mit einem Gleichstrommotor mit Anlaufstrombegrenzung
- mit einer jeweils motorzugeordneten, lediglich durch externen Anschluss des Gleichstrommotors (M) an seine Speisespannung (U;GND) selbsttätig aktivierbaren Regel- bzw. Steuervorrichtung (OS;IN;KO;VE bzw. IN,PWM,VE bzw. IN,VE bzw. MC,VE) zur Begrenzung des Motorstroms (I_{M}) beim Motoranlauf;
- mit einer Bildung einer im Sinne einer Anlaufstrombegrenzung variablen Steuerspannung (uₛₜ) für die Versorgungseinheit (VE) durch deren Steuerabhängigkeit von einem Microcontroller (MC) mit im Sinne von dem Steuersignal (S2) veränderlichen Tastverhältnis.

5. Stell- bzw. Hilfsantrieb nach zumindest einem der Ansprüche 1-4
- mit einer in den Gleichstrommotor (M), insbesondere in dessen Motorgehäuse (MG), integrierten Regel- bzw. Steuervorrichtung.

6. Stell- bzw. Hilfsantrieb nach zumindest einem der Ansprüche 1-4
- mit einer in die Motorzuleitung (ML) zu dem Gleichstrommotor (M) integrierten Regel- bzw. Steuervorrichtung.

7. Stell- bzw. Hilfsantrieb nach Anspruch 6
- mit einem Relais (RE) zum externen Anschluss der Speisespannung (U;GND) an den Gleichstrommotor (M) als Teil der Motorzuleitung (ML);
- mit einer in das Gehäuse (RE-G) des Relais (RE) integrierten Regel- bzw. Steuervorrichtung.

8. Stell- bzw. Hilfsantrieb nach zumindest einem der Ansprüche 1-7,
- mit einem Anschluss der Speisespannung (U;GND) an den Gleichstrommotor (M) durch die Regel- bzw. Steuervorrichtung.

9. Stell- bzw. Hilfsantrieb nach zumindest einem der Ansprüche 1-8
- mit einem zweipoligen Anschluss des Gleichstrommotors (M) an seine Speisespannung (U;GND) bei gleichzeitiger Aktivierung der Regel- bzw. Steuervorrichtung zur Begrenzung des Motorstroms (I_{M}).

10. Stell- bzw. Hilfsantrieb nach zumindest einem der Ansprüche 1-9
- mit einem im Sinne der Anlaufstrombegrenzung zwischen einem unteren Anfangswert und einem oberen Endwert ansteigenden Integrator-Steuersignal (S2).

11. Stell- bzw. Hilfsantrieb nach zumindest einem der Ansprüche 1-10,
- mit einer Anlaufstrombegrenzung durch entsprechende Ansteuerung, insbesondere Taktung, einer Versorgungseinheit (VE) für den Gleichstrommotor (M).

12. Stell- bzw. Hilfsantrieb nach Anspruch 11,
- mit einer Vollaussteuerung der Versorgungseinheit (VE) nach Beendigung des Anlaufs des Gleichstrommotors (M).

13. Stell- bzw. Hilfsantrieb nach zumindest einem der Ansprüche 1-12
- mit einer Abhängigkeit der Steuerspannung (uₛₜ) für die Versorungseinheit (VE) von dem Motorstrom (I_{M}) und/oder dem Drehmoment und/oder der Drehzahl und/oder der Temperatur und/oder der Speisespannung (U;GND) des Gleichstrommotors (M).
